# EUROPEAN PATENT APPLICATION

(11) **EP 4 520 723 A1**
(43) Date of publication of application: **12.03.2025**
(21) Application number: 24198698.3
(22) Date of filing: 05.09.2024
(51) Int. Cl.: C01G 53/42, C01G 53/84, H01M 4/505

(54) **POSITIVE ELECTRODE ACTIVE MATERIAL PRECURSOR AND POSITIVE ELECTRODE ACTIVE MATERIAL FOR SECONDARY BATTERIES**

(30) Priority: 06.09.2023 KR 20230118303
(71) Applicant: ECOPRO BM CO., LTD., Cheongju-si, Chungcheongbuk-do 28117 (KR)
(72) Inventor: LEE, Seul Gi, Chungcheongbuk-do 28116 (KR); CHOI, Jin Hyeok, Chungcheongbuk-do 28116 (KR); HAN, Kyu Suk, Chungcheongbuk-do 28116 (KR); CHOI, Yoon Young, Chungcheongbuk-do 28116 (KR)
(74) Representative: J A Kemp LLP

(57) **Abstract**

A positive electrode active material precursor particle and/or a positive electrode active material particle according to one embodiment of the present disclosure include a core portion and a shell portion, the core portion includes nickel (Ni) and zirconium (Zr), the shell portion includes cobalt (Co), a mol% value of the nickel (Ni) of the core portion is greater than a mol% value of nickel (Ni) of the shell portion, a mol% value of the zirconium (Zr) of the core portion is greater than a mol% value of zirconium (Zr) of the shell portion, and a mol% value of the cobalt (Co) of the shell portion is greater than a mol% value of cobalt (Co) of the core portion.

## Description

### BACKGROUND

### 1. Technical Field

The present disclosure relates to a positive electrode active material particle included in a positive electrode active material of a secondary battery, and a precursor particle thereof, and in particular, to a positive electrode active material precursor particle and a positive electrode active material particle for a secondary battery, each including a core portion and a shell portion.

### 2. Related Art

With the advancement of portable mobile electronic devices such as smartphones, MP3 players and tablet PCs, the demand for secondary batteries capable of storing electrical energy is explosively increasing. In particular, with the advent of electric vehicles, medium- to large-sized energy storage systems and portable devices requiring high energy density, the demand for lithium secondary batteries is increasing.

As a lithium composite oxide included in a positive electrode active material, a material that has received the most attention recently is lithium nickel manganese cobalt oxide (Li(NiₓCo_{y}Mn_{z})O₂, herein, x, y, z are atomic fractions of each independent oxide composition element, and 0<x≤1, 0<y≤1, 0<z≤1 and 0<x+y+z≤1). This positive electrode active material has an advantage of producing higher capacity compared to LiCoO₂ that has been actively studied and used as a positive electrode active material, and has an advantage of low price since the Co content is relatively small.

However, such a lithium composite oxide accompanies a volume change due to intercalation and deintercalation of lithium ions during charge and discharge. There is a problem in that primary particles of the lithium composite oxide rapidly change in volume during charge and discharge, cracks occur within secondary particles due to repeated charge and discharge, or collapse of a crystal structure or phase transition in a crystal structure occurs.

In order to compensate for such disadvantages, the demand for nickel (Ni) rich system-high nickel-based positive electrode active materials having a nickel (Ni) content of 60 mol% or greater as a positive electrode active material for secondary batteries began to increase.

However, while the positive electrode active material of such a nickel rich system has an advantage of high energy density, there are problems of increasing structural instability due to Li/Ni cation mixing caused by an increase in the Ni content, and rapidly deteriorating lifetime properties at room temperature and high temperature due to physical disconnection of inner particles caused by microcracks, deepening of electrolyte depletion and the like.

In addition, there are problems in that the structure becomes unstable due to the high Ni content, and lifetime properties decline as a large amount of gas is released during the process of repeated charge and discharge due to an increased reaction with an electrolyte at the particle surfaces and interfaces.

### SUMMARY

The present disclosure is directed to providing a positive electrode active material precursor and a positive electrode active material in which direct contact between the surface and an electrolyte liquid is suppressed to reduce the amount of gas generation directly affecting a decrease in the lifetime, and a bulk structure is strengthened.

The present disclosure is directed to solving a problem of difficulty in securing uniformity in coating and doping due to the nature of processes as the productions of positive electrode active material precursor and positive electrode active material increase in the industry.

The present disclosure is directed to providing a positive electrode active material precursor and a positive electrode active material capable of suppressing oxygen generation by suppressing cation mixing and maintaining a layered structure.

The present disclosure is directed to providing a positive electrode active material precursor and a positive electrode active material in which primary particle growth is controlled inside the positive electrode active material particle.

A positive electrode active material precursor particle according to one embodiment of the present disclosure includes a core portion and a shell portion, the core portion includes nickel (Ni) and zirconium (Zr), the shell portion includes cobalt (Co), a mol% value of the nickel (Ni) of the core portion may be greater than a mol% value of nickel (Ni) of the shell portion, a mol% value of the zirconium (Zr) of the core portion may be greater than a mol% value of zirconium (Zr) of the shell portion, and a mol% value of the cobalt (Co) of the shell portion may be greater than a mol% value of cobalt (Co) of the core portion.

In one embodiment, the shell portion of the positive electrode active material precursor particle may further include nickel (Ni).

In one embodiment, the shell portion of the positive electrode active material precursor particle may further include any one or more selected from among manganese (Mn) and aluminum (Al).

In one embodiment, the shell portion of the positive electrode active material precursor particle may not include zirconium (Zr).

In one embodiment, the core portion of the positive electrode active material precursor particle may not include cobalt (Co).

In one embodiment, the core portion of the positive electrode active material precursor particle may not include manganese (Mn) and aluminum (Al).

In one embodiment, in the positive electrode active material precursor particle, zirconium (Zr) may be included in an amount of 0.05 mol% to 0.3 mol% with respect to all transition metals included in the positive electrode active material precursor particle.

In one embodiment, the positive electrode active material precursor particle may further include a concentration gradient portion in which any one or more transition metals have a concentration gradient between the core portion and the shell portion.

A positive electrode active material particle according to one embodiment of the present disclosure includes a core portion and a shell portion, the core portion includes nickel (Ni) and zirconium (Zr), the shell portion includes cobalt (Co), a mol% value of the nickel (Ni) of the core portion may be greater than a mol% value of nickel (Ni) of the shell portion, a mol% value of the zirconium (Zr) of the core portion may be greater than a mol% value of zirconium (Zr) of the shell portion, and a mol% value of the cobalt (Co) of the shell portion may be greater than a mol% value of cobalt (Co) of the core portion.

In one embodiment, the positive electrode active material particle may further include a concentration gradient portion in which any one or more transition metals have a concentration gradient between the core portion and the shell portion.

In one embodiment, the positive electrode active material particle may further include a coating oxide.

A positive electrode active material particle according to one embodiment of the present disclosure may be prepared from the positive electrode active material precursor particle.

In one embodiment, the positive electrode active material particle may further include a coating oxide.

A positive electrode according to one embodiment of the present disclosure may include the positive electrode active material particle.

As an effect, the present disclosure provides a positive electrode active material precursor and a positive electrode active material in which direct contact between the surface and an electrolyte liquid is suppressed to reduce the amount of gas generation directly affecting a decrease in the lifetime, and a bulk structure is strengthened.

As an effect, the present disclosure solves a problem of difficulty in securing uniformity in coating and doping due to the nature of processes as the productions of positive electrode active material precursor and positive electrode active material increase in the industry.

As an effect, the present disclosure provides a positive electrode active material precursor and a positive electrode active material capable of suppressing oxygen generation by suppressing cation mixing and maintaining a layered structure.

As an effect, the present disclosure provides a positive electrode active material precursor and a positive electrode active material in which primary particle growth is controlled inside the positive electrode active material particle.

### BRIEF DESCRIPTION OF THE DRAWINGS

FIG. 1 shows results of cross-sectional SEM image and EDX analysis on a positive electrode active material precursor particle according to examples of the present disclosure.
FIG. 2 shows results of cross-sectional SEM images on a positive electrode active material particle according to an example of the present disclosure.
FIG. 3 shows results of FWHM (104) analyses on positive electrode active material particles according to comparative examples and examples of the present disclosure.
FIGS. 4 and 5 show results of analyzing charge and discharge capacity of batteries according to comparative examples and examples of the present disclosure.
FIG. 6 shows results of analyzing high-temperature lifetime properties of batteries according to comparative examples and examples of the present disclosure.
FIGS. 7 and 8 show results of analyzing amounts of gas generation of batteries according to a comparative example and an example of the present disclosure.
FIG. 9 shows results of FWHM (104) analyses on positive electrode active material particles according to comparative examples and examples of the present disclosure.
FIGS. 10 and 11 show results of analyzing charge and discharge capacity of batteries according to comparative examples and examples of the present disclosure.
FIGS. 12 and 13 show results of analyzing amounts of gas generation of batteries according to a comparative example and an example of the present disclosure.

### DETAILED DESCRIPTION

Expressions such as "including" used in the present specification need to be understood as open-ended terms that imply possibilities of including other constitutions.

"Preferred" and "preferably" used in the present specification refer to embodiments of the present disclosure capable of providing certain advantages under certain circumstances. However, they are not intended to exclude other embodiments from the category of the present disclosure.

In addition, singular forms used in the specification and the appended claims may be intended to include plural forms as well unless particularly indicated otherwise in the context.

Meanwhile, technical features described below relate to one embodiment to achieve the intended effects of the present disclosure described above.

In other words, by including technical features according to one embodiment described below, a positive electrode active material precursor particle and a positive electrode active material particle according to one embodiment of the present disclosure are capable of significantly improving battery properties when applied to a secondary battery.

The present disclosure relates to a positive electrode active material particle included in a positive electrode active material of a secondary battery, and a precursor particle thereof, and the secondary battery is not limited in the type as long as it is a battery capable of converting external electrical energy into a form of chemical energy and storing the chemical energy for reuse. As a more preferred example, the present disclosure may relate to a positive electrode active material particle included in a positive electrode active material of a lithium ion secondary battery, and a precursor particle thereof.

First, the positive electrode active material precursor particle of the present disclosure will be described.

The positive electrode active material precursor particle according to one embodiment of the present disclosure may be a material including nickel (Ni).

In one embodiment, the positive electrode active material precursor particle may be a nickel-based hydroxide.

In one embodiment, the nickel-based hydroxide may be represented by the following Chemical Formula 1.

[Chemical Formula 1] NiₓCo_{y}M_{1-x-y}(OH)₂

in Chemical Formula 1, M is selected from the group consisting of Zr, Mn, Al, B, S, Ba, Ce, Cr, F, Mg, V, Ti, Fe, Zn, Si, Y, Nb, Ga, Sn, Mo, W, P, Sr and combinations thereof, and 0.5≤x≤1.0, 0.0≤y≤0.4 and 0.0≤1-x-y≤0.4.

In one embodiment, the nickel-based hydroxide may be represented by the following Chemical Formula 1-1.

[Chemical Formula 1-1] Ni_{x'}Co_{y'}M1_{z'}M2_{1-x'-y'-z'}(OH)₂

in Chemical Formula 1-1, M1 is Al or Mn, M2 is selected from the group consisting of Zr, S, B, Ba, Ce, Cr, F, Mg, V, Ti, Fe, Zn, Si, Y, Nb, Ga, Sn, Mo, W, P, Sr and combinations thereof, and 0.5≤x'≤1.0, 0.0≤y'≤0.4, 0.0≤z'≤0.4 and 0.0≤1-x'-y'-z'≤0.4.

In one embodiment, x and/or x', which mean mol% of nickel (Ni) with respect to mol% of all transition metals in the nickel-based hydroxide, may be 0.5 or greater, 0.6 or greater, 0.7 or greater, 0.8 or greater or 0.9 or greater. In particular, the nickel-based hydroxide may be a high nickel-based hydroxide in which x and/or x' are 0.8 or greater or 0.9 or greater.

In one embodiment, y and/or y', which mean mol% of cobalt (Co) with respect to mol% of all transition metals in the nickel-based hydroxide, may be 0.4 or less, 0.3 or less, 0.2 or less or 0.1 or less.

The positive electrode active material precursor particle according to one embodiment of the present disclosure includes a core portion and a shell portion.

In one embodiment, the core portion of the positive electrode active material precursor particle may include nickel (Ni) and zirconium (Zr).

In addition, in one embodiment, a mol% value of the nickel (Ni) of the core portion may be greater than a mol% value of nickel (Ni) of the shell portion in the positive electrode active material precursor particle.

In addition, in one embodiment, a mol% value of the zirconium (Zr) of the core portion may be greater than a mol% value of zirconium (Zr) of the shell portion in the positive electrode active material precursor particle.

In addition, in one embodiment, the shell portion of the positive electrode active material precursor particle may not include zirconium (Zr).

In addition, in one embodiment, the shell portion of the positive electrode active material precursor particle may include cobalt (Co).

In addition, in one embodiment, a mol% value of the cobalt (Co) of the shell portion may be greater than a mol% value of cobalt (Co) of the core portion in the positive electrode active material precursor particle.

In addition, in one embodiment, the core portion of the positive electrode active material precursor particle may not include cobalt (Co).

In addition, in one embodiment, the shell portion of the positive electrode active material precursor particle may include nickel (Ni).

In addition, in one embodiment, the shell portion of the positive electrode active material precursor particle may include any one or more selected from among manganese (Mn) and aluminum (Al).

In addition, in one embodiment, the core portion of the positive electrode active material precursor particle may not include manganese (Mn) and/or aluminum (Al).

Regarding the "positive electrode active material precursor particle" of the present specification, the mol% value of a specific transition metal of the core portion means a mol% value of the specific transition metal with respect to all transition metals included in the core portion. In addition, the mol% value of a specific transition metal of the shell portion means a mol% value of the specific transition metal with respect to all transition metals included in the shell portion.

The positive electrode active material precursor particle of the present disclosure includes a core portion and a shell portion having different compositions, and is prepared by increasing a molar concentration of zirconium (Zr) in the core portion compared to in the shell portion, or including zirconium (Zr) only in the core portion and not in the shell portion.

In order to reduce gas generation directly affecting a decrease in the lifetime of a positive electrode active material, a method of strengthening a bulk structure by doping a specific transition metal element has been used in the art. For this, a method of preparing a lithium composite oxide and then diffusing such a transition metal element into the structure after surface coating and calcining, or introducing such a transition metal element during calcining in the mixing step with a lithium compound and diffusing the transition metal element into the structure for doping has been used. However, as the production of positive electrode active material precursor and positive electrode active material increases in the industry, there has been a problem in that it is difficult to secure uniformity in coating and doping due to the nature of processes.

Accordingly, in the present disclosure, zirconium (Zr) is doped more in the core portion compared to in the shell portion, or zirconium (Zr) is doped only in the core portion and not in the shell portion in the step of preparing the precursor, so that zirconium (Zr) is uniformly doped within the core portion.

The present disclosure enables uniform doping of zirconium (Zr) within the core portion of the positive electrode active material precursor particle, and allows the zirconium to be uniformly positioned on the lithium (Li) layer or the transition metal layer in the form of Zr⁴⁺ when preparing the positive electrode active material particle, which may increase capacity by suppressing cation mixing.

In addition, Zr-O has higher bonding force than Ni-O and is thereby effective in maintaining a layered structure, and therefore, by placing zirconium (Zr) in the core portion, oxygen generation may be further suppressed.

In addition, the positive electrode active material precursor particle of the present disclosure maximizes this effect by increasing a molar concentration of cobalt (Co) in the shell portion compared to in the core portion, including cobalt (Co) only in the shell portion and not in the core portion, increasing a molar concentration of nickel (Ni) in the core portion compared to in the shell portion, increasing a molar concentration of manganese (Mn) and/or aluminum (Al) in the shell portion compared to in the core portion, or including manganese (Mn) and/or aluminum (Al) only in the shell portion and not in the core portion.

As described above, the present disclosure controls compositions of the core portion and the shell portion and uniformly dopes zirconium (Zr) in the core portion of the precursor particle during the preparation of the positive electrode active material precursor particle, and as a result, battery properties may be further improved when a positive electrode active material prepared therefrom is applied to a battery.

The mol% value of zirconium (Zr) with respect to all transition metals included in the positive electrode active material precursor particle of the present disclosure may be 0.3 mol% or less, 0.2 mol% or less, 0.15 mol% or less, 0.05 mol% or greater, 0.06 mol% or greater, 0.07 mol% or greater, 0.08 mol% or greater or 0.09 mol% or greater, and more preferably, battery properties may be further improved when the mol% value of zirconium (Zr) is 0.07 mol% to 0.2 mol% and more preferably 0.09 mol% to 0.15 mol%. When doping zirconium (Zr) in a certain amount or greater, Li ion migration is suppressed by the Pilar effect, which may result in a decrease in the charge and discharge capacity. In addition, when the zirconium (Zr) content is too small, the above-described effects may be insignificant. Accordingly, doping the zirconium (Zr) in the above-mentioned content range may be effective in increasing structural stability and increasing charge and discharge capacity.

The present disclosure is capable of strengthening the structure and significantly suppressing gas generation during high-temperature storage through applying a specific process, applying a specific doping material and controlling the numerical value of doping content.

In one embodiment, in the core portion of the positive electrode active material precursor particle, the mol% value of nickel (Ni) with respect to all transition metals included in the core portion may be 80 mol% or greater, 85 mol% or greater, 90 mol% or greater or 95 mol% or greater.

In one embodiment, in the shell portion of the positive electrode active material precursor particle, the mol% value of nickel (Ni) with respect to all transition metals included in the shell portion may be 60 mol% or greater, 65 mol% or greater, 85 mol% or less, 80 mol% or less or 75 mol% or less.

In one embodiment, in the shell portion of the positive electrode active material precursor particle, the mol% value of cobalt (Co) with respect to all transition metals included in the shell portion may be 40 mol% or less, 30 mol% or less, 10 mol% or greater or 20 mol% or greater.

In one embodiment, in the shell portion of the positive electrode active material precursor particle, the mol% value of manganese (Mn) with respect to all transition metals included in the shell portion may be 20 mol% or less, 15 mol% or less or 10 mol% or less.

The present disclosure is capable of strengthening the structure and significantly suppressing gas generation during high-temperature storage by controlling the core portion and the shell portion of the positive electrode active material precursor particle to have the above-mentioned content.

In addition, the present disclosure is capable of stabilizing the structure and significantly improving charge and discharge capacity by mixing zirconium (Zr) at a specific stage of the precursor manufacturing step, and then, during first heat treatment after mixing with a lithium compound, performing heat treatment at 670°C to 690°C, more preferably 675°C to 685°C and more preferably near 680°C.

In one embodiment, an average thickness of the core portion of the positive electrode active material precursor particle (average length from secondary particle center to core portion surface) may be 90% or greater, 95% or greater, 98% or less or 97% or less of the secondary particle radius.

In one embodiment, the core portion of the positive electrode active material precursor particle may have an average thickness of 4.5 um or greater, 5.0 um or greater, 5.5 um or greater, 7.0 um or less, 6.5 um or less or 6.0 um or less.

In one embodiment, an average thickness of the shell portion of the positive electrode active material precursor particle (average length from surface of secondary particle core portion to secondary particle surface or average length from outer surface of secondary particle concentration gradient portion to secondary particle surface) may be 10% or less, 5% or less, 2% or greater or 3% or greater of the secondary particle radius.

In one embodiment, the shell portion of the positive electrode active material precursor particle may have an average thickness of 0.1 um or greater, 0.15 um or greater, 0.25 um or less or 0.2 um or less.

Meanwhile, in the present specification, a 'particle diameter' represents an average diameter (D50) when the particle is spherical, and the 'particle radius' means 1/2 of the 'particle diameter'.

The present disclosure is capable of improving battery properties such as structural stability and lifetime by controlling the thicknesses of the core portion and the shell portion to thicknesses within the above-mentioned ranges while controlling composition ratios of the core portion and the shell portion in the positive electrode active material precursor particle.

In one embodiment, the positive electrode active material precursor particle may have a diameter of 8 um to 20 µm.

In one embodiment, the positive electrode active material precursor having the above-mentioned particle size may be used either alone (unimodal), or may be used together with elementary particles having a smaller particle size (bimodal).

The positive electrode active material precursor particle of the present disclosure may further include a concentration gradient portion in which any one or more transition metals have a concentration gradient between the core portion and the shell portion.

In one embodiment, an average thickness of the concentration gradient portion of the positive electrode active material precursor particle (average length from surface of secondary particle core portion to outer surface of secondary particle concentration gradient portion) may be 10% or less, 5% or less, 2% or greater or 3% or greater of the secondary particle radius.

In one embodiment, the concentration gradient portion of the positive electrode active material precursor particle may have an average thickness of 0.10 µm or greater, 0.15 um or greater, 0.25 um or less or 0.20 um or less.

In one embodiment, the concentration gradient portion may be a concentration gradient portion in which a molar concentration of cobalt (Co) increases in a direction from the core portion to the shell portion.

In addition, in one embodiment, the concentration gradient portion may be a concentration gradient portion in which a molar concentration of nickel (Ni) decreases in a direction from the core portion to the shell portion.

In addition, in one embodiment, the concentration gradient portion may be a concentration gradient portion in which a molar concentration of manganese (Mn) and/or aluminum (Al) increases in a direction from the core portion to the shell portion.

In addition, in one embodiment, the concentration gradient portion may be a concentration gradient portion in which a molar concentration of zirconium (Zr) decreases in a direction from the core portion to the shell portion.

Next, the positive electrode active material particle of the present disclosure will be described.

The positive electrode active material particle according to one embodiment of the present disclosure may be a lithium nickel-based composite oxide including lithium, nickel and oxygen.

In one embodiment, the positive electrode active material particle may include cobalt.

In one embodiment, the positive electrode active material particle may include manganese (Mn) and/or aluminum (Al) .

In one embodiment, the positive electrode active material particle may be represented by the following Chemical Formula 2.

[Chemical Formula 2] LiₐNiₓCo_{y}M_{1-x-y}O₂

in Chemical Formula 2, M is selected from the group consisting of Zr, Mn, Al, S, B, Ba, Ce, Cr, F, Mg, V, Ti, Fe, Zn, Si, Y, Nb, Ga, Sn, Mo, W, P, Sr and combinations thereof, and 0.9≤a≤1.2, 0.5≤x≤1.0, 0.0≤y≤0.4 and 0.0≤1-x-y≤0.4.

In one embodiment, the positive electrode active material particle may be represented by the following Chemical Formula 2-1.

[Chemical Formula 2-1] Li_{a'}Ni_{x'}Co_{y'}M1_{z'}M2_{1-x'-y'-z'}O₂

in Chemical Formula 2-1, M1 is Al or Mn, M2 is selected from the group consisting of Zr, S, B, Ba, Ce, Cr, F, Mg, V, Ti, Fe, Zn, Si, Y, Nb, Ga, Sn, Mo, W, P, Sr and combinations thereof, and 0.9≤a'≤1.2, 0.5≤x'≤1.0, 0.0≤y'≤0.4, 0.0≤z'≤0.4 and 0.0≤1-x'-y'-z'≤0.4.

In one embodiment, a and/or a', which mean mol% of lithium (Li) with respect to mol% of all transition metals other than lithium (Li) in the positive electrode active material particle, may be 0.9 or greater, 1.0 or greater, 1.2 or less, 1.1 or less or 1.05 or less.

In one embodiment, x and/or x', which mean mol% of nickel (Ni) with respect to mol% of all transition metals other than lithium (Li) in the positive electrode active material particle, may be 0.5 or greater, 0.6 or greater, 0.7 or greater, 0.8 or greater or 0.9 or greater. Particularly, x and/or x' may be 0.8 or greater or 0.9 or greater, which indicates a high nickel-based lithium composite oxide.

In one embodiment, y and/or y', which mean mol% of cobalt (Co) with respect to mol% of all transition metals other than lithium (Li) in the positive electrode active material particle, may be 0.4 or less, 0.3 or less, 0.2 or less or 0.1 or less.

The positive electrode active material particle according to one embodiment of the present disclosure may have a crystal structure of hexagonal α-NaFeO₂ (R-3m space group) .

The positive electrode active material particle according to one embodiment of the present disclosure includes a core portion and a shell portion.

In one embodiment, the core portion of the positive electrode active material particle may include nickel (Ni) and zirconium (Zr).

In addition, in one embodiment, a mol% value of the nickel (Ni) of the core portion may be greater than a mol% value of nickel (Ni) of the shell portion in the positive electrode active material particle.

In addition, in one embodiment, a mol% value of the zirconium (Zr) of the core portion may be greater than a mol% value of zirconium (Zr) of the shell portion in the positive electrode active material particle.

In addition, in one embodiment, the shell portion of the positive electrode active material particle may include cobalt (Co).

In addition, in one embodiment, a mol% value of the cobalt (Co) of the shell portion may be greater than a mol% value of cobalt (Co) of the core portion in the positive electrode active material particle.

In addition, in one embodiment, the core portion of the positive electrode active material particle may not include cobalt (Co).

In addition, in one embodiment, the shell portion of the positive electrode active material particle may include nickel (Ni).

In addition, in one embodiment, the shell portion of the positive electrode active material particle may include any one or more selected from among manganese (Mn) and aluminum (Al).

In addition, in one embodiment, the core portion of the positive electrode active material particle may not include manganese (Mn) and/or aluminum (Al).

Regarding the "positive electrode active material particle" of the present specification, the mol% value of a specific transition metal of the core portion means a mol% value of the specific transition metal with respect to all transition metals other than lithium (Li) included in the core portion. In addition, the mol% value of a specific transition metal of the shell portion means a mol% value of the specific transition metal with respect to all transition metals other than lithium (Li) included in the shell portion.

The positive electrode active material particle of the present disclosure includes a core portion and a shell portion having different compositions, and may be prepared by increasing a molar concentration of zirconium (Zr) in the core portion compared to in the shell portion.

In addition, in the positive electrode active material particle of the present disclosure, zirconium (Zr) is doped more in the core portion compared to in the shell portion in the preparing of the precursor, so that zirconium (Zr) is uniformly doped within the core portion of the positive electrode active material particle.

In addition, in the positive electrode active material particle of the present disclosure, zirconium (Zr) is doped in the preparing of the core portion of the precursor, so that zirconium (Zr) is uniformly doped within the core portion of the positive electrode active material particle.

In addition, the positive electrode active material particle of the present disclosure maximizes this effect by increasing a molar concentration of cobalt (Co) in the shell portion compared to in the core portion, including cobalt (Co) only in the shell portion and not in the core portion, increasing a molar concentration of nickel (Ni) in the core portion compared to in the shell portion, increasing a molar concentration of manganese (Mn) and/or aluminum (Al) in the shell portion compared to in the core portion, or including manganese (Mn) and/or aluminum (Al) only in the shell portion and not in the core portion.

In one embodiment, in the core portion of the positive electrode active material particle, the mol% value of nickel (Ni) with respect to all transition metals other than lithium (Li) included in the core portion may be 80 mol% or greater, 85 mol% or greater, 90 mol% or greater or 95 mol% or greater.

In one embodiment, in the shell portion of the positive electrode active material particle, the mol% value of nickel (Ni) with respect to all transition metals other than lithium (Li) included in shell portion may be 60 mol% or greater, 65 mol% or greater, 85 mol% or less, 80 mol% or less or 75 mol% or less.

In one embodiment, in the shell portion of the positive electrode active material particle, the mol% value of cobalt (Co) with respect to all transition metals other than lithium (Li) included in shell portion may be 40 mol% or less, 30 mol% or less, 10 mol% or greater or 20 mol% or greater.

In one embodiment, in the shell portion of the positive electrode active material particle, the mol% value of manganese (Mn) with respect to all transition metals other than lithium (Li) included in shell portion may be 20 mol% or less, 15 mol% or less or 10 mol% or less.

The present disclosure is capable of strengthening the structure and significantly suppressing gas generation during high-temperature storage by controlling the core portion and the shell portion of the positive electrode active material particle to have the above-mentioned content.

In one embodiment, the positive electrode active material particle may be a secondary particle formed by agglomeration of one or more primary particles.

In one embodiment, the primary particle may include one or more crystallites.

In one embodiment, the positive electrode active material secondary particle may have a form of single particle including one primary particle, and may have a form of single crystal when the primary particle is formed with one crystallite.

In one embodiment of another aspect, the positive electrode active material secondary particle may have a form of multi-particle or poly-crystal including two or more primary particles. More preferably, the positive electrode active material secondary particle may have a form of multi-particle or poly-crystal in which 20 or more primary particles agglomerate.

In one embodiment, zirconium (Zr) included in the core portion of the positive electrode active material particle may act as a dopant, which acts as a flux that allows primary particles in the positive electrode active material to grow.

More specifically, zirconium (Zr) doped when preparing the core portion of the positive electrode active material precursor particle allows primary particles in the shell portion to grow as well while growing primary particles in the core portion of the positive electrode active material particle during calcining with a lithium compound, and as a result, the primary particles may grow to a uniform size in the entire positive electrode active material secondary particle.

The present disclosure is capable of stabilizing the structure and significantly improving charge and discharge capacity by increasing the size of primary particles in the positive electrode active material particle through applying a specific process, applying a specific doping material and controlling the numerical value of doping content when preparing the positive electrode active material particle.

In one embodiment, the range of FWHM₍₁₀₄₎, which means a full width at half maximum (FWHM) value of (104) peak of XRD defined by a hexagonal lattice having a R-3m space group of the positive electrode active material particle of the present disclosure, may be 0.19 or greater, 0.20 or greater, 0.21 or greater, 0.23 or less, 0.22 or less, 0.21 or less or 0.20 or less.

Meanwhile, the FWHM₍₁₀₄₎ is corrected by the following Relation Formula 1 in the present disclosure. [Relation Formula 1] FWHM(104)=FWHMpowder (104)-FWHMSi powder (220)
(in [Relation Formula 1], FWHM_{Si powder (220)} represents a full width at half maximum (FWHM) of (220) peak observed around 47.3° (2Θ) in the XRD measurement value of Si powder)

Since a full width at half maximum (FWHM) value in the XRD analysis has deviations and errors due to various variables such as condition of analysis equipment, X-ray sources and measurement conditions, the value is corrected with a full width at half maximum (FWHM) of Si powder as a standard sample as in [Relation Formula 1].

In the present disclosure, Si powder (product number 215619) of Sigma-Aldrich is used as the Si powder.

In the present disclosure, the X-ray diffraction (XRD) analysis is performed using a Bruker D8 Advance diffractometer with Cu Kα radiation (1.540598 Å) under a condition of a step size (°/step) of 0.01°/step and a measurement time per step of 0.1 s/step.

In one embodiment, an average thickness of the core portion of the positive electrode active material particle (average length from secondary particle center to core portion surface) may be 90% or greater, 95% or greater, 98% or less or 97% or less of the secondary particle radius.

In one embodiment, an average thickness of the shell portion of the positive electrode active material particle (average length from surface of secondary particle core portion to secondary particle surface or average length from outer surface of secondary particle concentration gradient portion to secondary particle surface) may be 10% or less, 5% or less, 2% or greater or 3% or greater of the secondary particle radius.

The present disclosure is capable of improving battery properties such as structural stability and lifetime by controlling the thicknesses of the core portion and the shell portion to thicknesses within the above-mentioned ranges while controlling the compositions of the core portion and the shell portion in the positive electrode active material particle.

In one embodiment, the positive electrode active material particle (secondary particle) may have a diameter of 8 um to 20 µm.

In one embodiment, the positive electrode active material particle may further include a concentration gradient portion in which any one or more transition metals have a concentration gradient between the core portion and the shell portion.

In one embodiment, an average thickness of the concentration gradient portion of the positive electrode active material particle (average length from surface of secondary particle core portion to outer surface of secondary particle concentration gradient portion) may be 10% or less, 5% or less, 2% or greater or 3% or greater of the secondary particle radius.

In one embodiment, the concentration gradient portion may be a concentration gradient portion in which a molar concentration of cobalt (Co) increases in a direction from the core portion to the shell portion.

In addition, in one embodiment, the concentration gradient portion may be a concentration gradient portion in which a molar concentration of nickel (Ni) decreases in a direction from the core portion to the shell portion.

In addition, in one embodiment, the concentration gradient portion may be a concentration gradient portion in which a molar concentration of manganese (Mn) and/or aluminum (Al) increases in a direction from the core portion to the shell portion.

In addition, in one embodiment, the concentration gradient portion may be a concentration gradient portion in which a molar concentration of zirconium (Zr) decreases in a direction from the core portion to the shell portion.

The positive electrode active material particle according to one embodiment of the present disclosure may be prepared from the positive electrode active material precursor particle, and characteristics of the positive electrode active material particle are as described above.

The positive electrode active material particle according to one embodiment of the present disclosure may further include a coating oxide.

In one embodiment, the coating oxide may be a coating oxide occupying at least a part of the shell portion described above.

In one embodiment, the coating oxide may occupy at least a part of at least any one of grain boundaries between primary particles, surfaces of primary particles and surfaces of secondary particles in the positive electrode active material particle.

In one embodiment, the coating oxide may be represented by the following Chemical Formula 3.

[Chemical Formula 3] LiₚM3_{q}Oᵣ

in Chemical Formula 3, M3 is any one or more selected from among Ni, Mn, Co, Fe, Cu, Nb, Mo, Ti, Al, Cr, Zr, Zn, Na, K, Ca, Mg, Pt, Au, S, B, P, Eu, Sm, W, Ce, V, Ba, Ta, Sn, Hf, Gd and Nd, and 0≤p≤10, 0<q≤8 and 2≤r≤13.

For example, in Chemical Formula 3, M3 means a coating element, and the coating oxide may be an oxide in which lithium and an element represented by M3 are composited, or an oxide of M3.

For example, the coating oxide may be LiₚCo_{q}Oᵣ, LiₚW_{q}Oᵣ, LiₚZr_{q}Oᵣ, LiₚTi_{q}Oᵣ, LiₚNi_{q}Oᵣ, LiₚAl_{q}Oᵣ, LiₚMo_{q}Oᵣ, Co_{q}Oᵣ, Al_{q}Oᵣ, W_{q}Oᵣ, Zr_{q}Oᵣ, Ti_{q}Oᵣ, B_{q}Oᵣ, Liₚ(W/Ti)_{q}Oᵣ, Liₚ(W/Zr)_{q}Oᵣ, Liₚ(W/Ti/Zr)_{q}Oᵣ or Liₚ(W/Ti/B)_{q}Oᵣ, but is not limited thereto.

The coating oxide may include a concentration gradient portion in which a molar concentration of an element included in the coating oxide changes. For example, when the coating oxide includes lithium, a molar concentration of lithium may change. In addition, for example, molar concentrations of any one or more of M3 included in the coating oxide may change.

In one embodiment, when the coating oxide occupies at least a part of the surface area of the primary particle forming the outermost layer of the secondary particle, the concentration gradient portion may decrease, increase, or increase and then decrease in a direction from the surface of the primary particle forming the outermost layer of the secondary particle to the center of the secondary particle.

In addition, the concentration gradient portion may decrease, increase, or increase and then decrease in a direction from the surface of the primary particle forming the outermost layer of the secondary particle to the center of the primary particle.

In one embodiment, when the coating oxide occupies at least a part of the surface area of the primary particle that does not form the outermost layer of the secondary particle, the concentration gradient portion may decrease, increase, or increase and then decrease in a direction from the surface of the primary particle to the center of the primary particle.

The coating oxide according to one embodiment of the present disclosure improves output properties of a battery due to its high ion conductivity, and further improves a lifetime of a battery by protecting the surface of the lithium composite oxide. In addition, the coating oxide is capable of effectively reducing residual lithium present on the surface of the lithium composite oxide, and preventing side reactions caused by unreacted residual lithium.

In a more preferred embodiment, the coating oxide may include any one or more selected from among titanium (Ti), aluminum (Al), zirconium (Zr) and boron (B).

In one embodiment, when coating the zirconium (Zr), the zirconium (Zr) may be mixed in an amount of 0.05 mol% to 0.2 mol% with respect to all transition metals other than lithium (Li) included in the positive electrode active material particle, and heat treated. When coating and heat treating the zirconium (Zr) on the positive electrode active material particle in which zirconium (Zr) is uniformly doped in the core portion, battery properties may be further improved since zirconium (Zr) is uniformly doped in the entire positive electrode active material particle.

In one embodiment, when a combination of 0.5 mol% to 0.7 mol% of titanium (Ti), 0.5 mol% to 0.7 mol% of aluminum (Al), 0.05 mol% to 0.2 mol% of zirconium (Zr) and 0.2 mol% to 0.3 mol% of boron(B) with respect to all transition metals other than lithium (Li) included in the positive electrode active material particle is coated, battery properties may be further improved.

A method for preparing the positive electrode active material of the present disclosure is not limited as long as the above-described technical features are included, however, in a more preferred embodiment, the positive electrode active material may be prepared as follows.

First, a compound including zirconium (Zr) is mixed with a compound including a transition metal, and a hydroxide is prepared so that the core portion and the shell portion have different compositions.

Next, the prepared hydroxide is mixed with a lithium compound, and the mixture is subjected to first heat treatment at 670°C to 690°C to prepare an oxide.

In an additional embodiment of preparation, the prepared oxide may be mixed with a coating oxide, and the mixture may be subjected to second heat treatment at 670°C to 690°C.

In an additional embodiment of preparation, the second heat-treated oxide may be washed and then dried.

In an additional embodiment of preparation, an additional coating oxide may be mixed with the dried oxide, and the mixture may be subjected to third heat treatment at 250°C to 350°C.

Meanwhile, technical features of the positive electrode active material precursor particle described above may relate to average technical features of a plurality of positive electrode active material precursor particles included in the positive electrode active material precursor.

In addition, technical features of the positive electrode active material particle described above may relate to average technical features of a plurality of the positive electrode active material particles included in the positive electrode active material.

Meanwhile, the meaning of '≤' , 'or greater' or 'or less' described in the present disclosure may be replaced with a meaning of '<', 'greater than' or `less than'.

A positive electrode according to one embodiment of the present disclosure may include the positive electrode active material particle described above.

Except for the positive electrode active material particle described above, the positive electrode may have a known structure and prepared using a known preparation method. A binder, a conductor and/or a solvent are not particularly limited as long as they may be used on a positive electrode current collector of a secondary battery.

A secondary battery according to one embodiment of the present disclosure may include the positive electrode active material particle described above.

The secondary battery may specifically include a positive electrode, a negative electrode placed opposite to the positive electrode, and an electrolyte provided between the positive electrode and the negative electrode, but is not particularly limited thereto as long as it may be used as a secondary battery.

Hereinafter, examples of the present disclosure will be described more specifically.

### Preparation of Hydroxide Precursor

### <Example 1>

To a reactor, 90.8 mol% of NiSO₄·6H₂O with respect to all transition metals included in a precursor particle was introduced, and 0.1 mol% of Zr(SO₄)₂, 25 wt.% of NaOH and 28 wt.% of NH₄OH were introduced thereto while stirring.

Next, 2.7 mol% of NiSO₄·6H₂O, 5 mol% of CoSO₄·7H₂O, 1.4 mol% of MnSO₄·H₂O, 25 wt. % of NaOH and 28 wt. % of NH₄OH with respect to all transition metals included in the precursor particle were introduced thereto while stirring to prepare particles.

Herein, the temperature inside the reactor was maintained at 58°C, and N₂, an inert gas, was introduced to the reactor to prevent the prepared particles from being oxidized.

After the reaction was completed, washing and dehydration were performed using a filter press (F/P) device.

Finally, the dewatered product was dried at 120°C to prepare a hydroxide precursor having a composition of 93.5 mol% of Ni, 5 mol% of Co, 1.4 mol% of Mn and 0.1 mol% of Zr.

### <Example 2>

To a reactor, 90.7 mol% of NiSO₄·6H₂O with respect to all transition metals included in a precursor particle was introduced, and 0.2 mol% of Zr(SO₄)₂, 25 wt.% of NaOH and 28 wt.% of NH₄OH were introduced thereto while stirring.

Next, 2.7 mol% of NiSO₄·6H₂O, 5 mol% of CoSO₄·7H₂O, 1.4 mol% of MnSO₄·H₂O, 25 wt. % of NaOH and 28 wt. % of NH₄OH with respect to all transition metals included in the precursor particle were introduced thereto while stirring to prepare particles.

In the same manner as in Example 1 except for the above process, a hydroxide precursor having a composition of 93.4 mol% of Ni, 5 mol% of Co, 1.4 mol% of Mn and 0.2 mol% of Zr was prepared.

### <Example 3>

To a reactor, 90.6 mol% of NiSO₄·6H₂O with respect to all transition metals included in a precursor particle was introduced, and 0.3 mol% of Zr(SO₄)₂, 25 wt.% of NaOH and 28 wt.% of NH₄OH were introduced thereto while stirring.

Next, 2.7 mol% of NiSO₄·6H₂O, 5 mol% of CoSO₄·7H₂O, 1.4 mol% of MnSO₄·H₂O, NaOH and NH₄OH with respect to all transition metals included in the precursor particle were introduced thereto while stirring to prepare particles.

In the same manner as in Example 1 except for the above, a hydroxide precursor having a composition of 93.3 mol% of Ni, 5 mol% of Co, 1.4 mol% of Mn and 0.3 mol% of Zr was prepared.

### <Comparative Example 1>

In a reactor, 0.1 mol% of Zr(SO₄)₂, 25 wt. % of NaOH and 28 wt.% of NH₄OH were introduced to an aqueous solution in which NiSO₄·6H₂O, CoSO₄·6H₂O and MnSO₄·H₂O were mixed in a molar ratio of 94:5:1 while stirring to prepare particles.

In the same manner as in Example 1 except for the above, a hydroxide precursor having a composition of 93.5 mol% of Ni, 5 mol% of Co, 1.4 mol% of Mn and 0.1 mol% of Zr was prepared.

### <Comparative Example 2>

To a reactor, 90.9 mol% of NiSO₄·6H₂O with respect to all transition metals included in a precursor particle was introduced, and 25 wt.% of NaOH and 28 wt.% of NH₄OH were introduced thereto while stirring.

Next, 2.7 mol% of NiSO₄·6H₂O, 5 mol% of CoSO₄·7H₂O, 1.4 mol% of MnSO₄·H₂O, 25 wt. % of NaOH and 28 wt. % of NH₄OH with respect to all transition metals included in the precursor particle were introduced thereto while stirring to prepare particles.

In the same manner as in Example 1 except for the above, a hydroxide precursor having a composition of 93.6 mol% of Ni, 5 mol% of Co and 1.4 mol% of Mn was prepared.

### Preparation of Oxide

### <Example 1-1>

The hydroxide precursor prepared in Example 1 and LiOH (Li/metal molar ratio=1.04), a lithium raw material, were mixed.

The mixture was placed in a calcining furnace (O2, 680°C, 2°C/min, duration 10 hours) and heat treated, and then subjected to furnace cooling to prepare an oxide.

### <Example 1-2>

An oxide was prepared in the same manner as in Example 1-1, except that the mixture was placed in a calcining furnace at 690°C and heat treated instead of placing and heat treating the mixture in a calcining furnace at 680°C in Example 1-1.

### <Example 1-3>

An oxide was prepared in the same manner as in Example 1-1, except that the mixture was placed in a calcining furnace at 700°C and heat treated instead of placing and heat treating the mixture in a calcining furnace at 680°C in Example 1-1.

### <Example 1-4>

An oxide was prepared in the same manner as in Example 1-1, except that the mixture was placed in a calcining furnace at 710°C and heat treated instead of placing and heat treating the mixture in a calcining furnace at 680°C in Example 1-1.

### <Example 2-1>

An oxide was prepared in the same manner as in Example 1-1, except that the hydroxide precursor prepared in Example 2 was mixed instead of the hydroxide precursor prepared in Example 1.

### <Example 3-1>

An oxide was prepared in the same manner as in Example 1-1, except that the hydroxide precursor prepared in Example 3 was mixed instead of the hydroxide precursor prepared in Example 1.

### <Comparative Example 1-1>

An oxide was prepared in the same manner as in Example 1-1, except that the hydroxide precursor prepared in Comparative Example 1 was mixed instead of the hydroxide precursor prepared in Example 1.

### <Comparative Example 1-2>

An oxide was prepared in the same manner as in Comparative Example 1-1, except that the mixture was placed in a calcining furnace at 690°C and heat treated instead of placing and heat treating the mixture in a calcining furnace at 680°C in Comparative Example 1-1.

### <Comparative Example 1-3>

An oxide was prepared in the same manner as in Comparative Example 1-1, except that the mixture was placed in a calcining furnace at 700°C and heat treated instead of placing and heat treating the mixture in a calcining furnace at 680°C in Comparative Example 1-1.

### <Comparative Example 2-1>

An oxide was prepared in the same manner as in Example 1-1, except that the hydroxide precursor prepared in Comparative Example 2 was mixed instead of the hydroxide precursor prepared in Example 1.

### <Comparative Example 2-2>

An oxide was prepared in the same manner as in Comparative Example 2-1, except that the mixture was placed in a calcining furnace at 690°C and heat treated instead of placing and heat treating the mixture in a calcining furnace at 680°C in Comparative Example 2-1.

### <Comparative Example 2-3>

An oxide was prepared in the same manner as in Comparative Example 2-1, except that the mixture was placed in a calcining furnace at 700°C and heat treated instead of placing and heat treating the mixture in a calcining furnace at 680°C in Comparative Example 2-1.

### <Comparative Example 2-4>

An oxide was prepared in the same manner as in Comparative Example 2-1, except that the mixture was placed in a calcining furnace at 710°C and heat treated instead of placing and heat treating the mixture in a calcining furnace at 680°C in Comparative Example 2-1.

### Preparation of Coating Oxide

### <Example 1-1-1>

The oxide prepared in Example 1-1 was mixed with 0.6 mol% of TiO₂, 0.6 mol% of Al₂O₃ and 0.1 mol% of ZrO₂, and then placed in a calcining furnace (O2, 675°C, 4.4°C/min, duration 8 hours) and heat treated.

The heat-treated oxide was sorted and crushed, then washed for 1 hour by introducing distilled water thereto, and then dried.

Next, H₃BO₃ was mixed thereto so that the amount is 0.235% of the dried product weight, and the mixture was placed in a calcining furnace (O2, 300°C, 4.4°C/min, duration 8 hours), heat treated, and then naturally cooled to prepare a coating oxide.

### <Example 1-2-1>

A coating oxide was prepared in the same manner as in Example 1-1-1, except that the oxide prepared in Example 1-2 was mixed instead of the oxide prepared in Example 1-1.

### <Example 1-3-1>

A coating oxide was prepared in the same manner as in Example 1-1-1, except that the oxide prepared in Example 1-3 was mixed instead of the oxide prepared in Example 1-1.

### <Example 1-4-1>

A coating oxide was prepared in the same manner as in Example 1-1-1, except that the oxide prepared in Example 1-4 was mixed instead of the oxide prepared in Example 1-1.

### <Example 2-1-1>

A coating oxide was prepared in the same manner as in Example 1-1-1, except that the oxide prepared in Example 2-1 was mixed instead of the oxide prepared in Example 1-1.

### <Example 3-1-1>

A coating oxide was prepared in the same manner as in Example 1-1-1, except that the oxide prepared in Example 3-1 was mixed instead of the oxide prepared in Example 1-1.

### <Comparative Example 1-1-1>

A coating oxide was prepared in the same manner as in Example 1-1-1, except that the oxide prepared in Comparative Example 1-1 was mixed instead of the oxide prepared in Example 1-1.

### <Comparative Example 1-2-1>

A coating oxide was prepared in the same manner as in Example 1-1-1, except that the oxide prepared in Comparative Example 1-2 was mixed instead of the oxide prepared in Example 1-1.

### <Comparative Example 1-3-1>

A coating oxide was prepared in the same manner as in Example 1-1-1, except that the oxide prepared in Comparative Example 1-3 was mixed instead of the oxide prepared in Example 1-1.

### <Comparative Example 2-1-1>

A coating oxide was prepared in the same manner as in Example 1-1-1, except that the oxide prepared in Comparative Example 2-1 was mixed instead of the oxide prepared in Example 1-1.

### <Comparative Example 2-2-1>

A coating oxide was prepared in the same manner as in Example 1-1-1, except that the oxide prepared in Comparative Example 2-2 was mixed instead of the oxide prepared in Example 1-1.

### <Comparative Example 2-3-1>

A coating oxide was prepared in the same manner as in Example 1-1-1, except that the oxide prepared in Comparative Example 2-3 was mixed instead of the oxide prepared in Example 1-1.

### <Comparative Example 2-4-1>

A coating oxide was prepared in the same manner as in Example 1-1-1, except that the oxide prepared in Comparative Example 2-4 was mixed instead of the oxide prepared in Example 1-1.

### Manufacture of Lithium Secondary Battery

94 wt% of the positive electrode active material prepared in each of Examples and Comparative Examples, 3 wt% of artificial graphite and 3 wt% of PVDF binder were dispersed in 3.5 g of N-methyl-2 pyrrolidone (NMP) to prepare a positive electrode slurry. The positive electrode slurry was coated and dried on an aluminum (Al) thin film, a positive electrode current collector, having a thickness of 15 µm, and roll pressed to prepare a positive electrode. The positive electrode had a loading level of 7 mg/cm², and electrode density of 3.2 g/cm³.

A coin battery was manufactured according to a commonly known manufacturing process with lithium foil as a counter electrode for the positive electrode, a porous polyethylene film (Celgard 2300, thickness: 25 um) as a separator, and using an electrolyte liquid in which LiPF₆ is present at a concentration of 1.5 M in a solvent obtained by mixing ethylene carbonate and ethylmethyl carbonate in a volume ratio of 3:7.

### <Experimental Example>

### (1) Cross-Sectional SEM Image and EDX Analysis

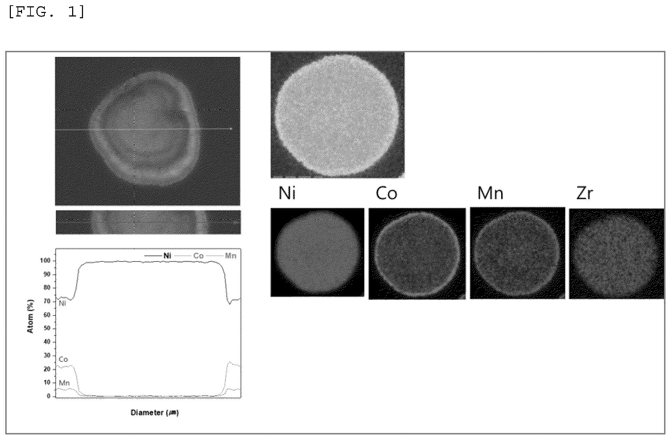

For the hydroxide precursor of Example 1, the cross section was obtained using a cross section polisher at a current of 380 µA for 1 hour and 30 minutes. A cross-sectional SEM image of the hydroxide precursor particle was obtained using JSM-7610FPlus (JEOL) as FE-SEM at a voltage of 2 kV, and then changes in the transition metal concentrations are shown in FIG. 1 through line scanning.

According to the SEM image of FIG. 1, it was identified that Ni and Zr are included in the core portion, and Co and Mn are included in the shell portion.

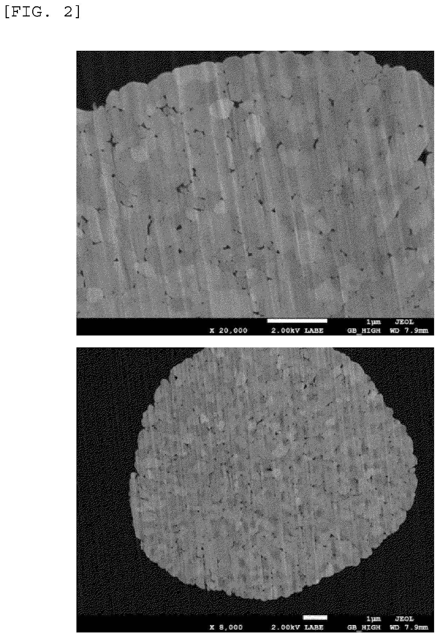

In addition, a cross-sectional SEM image of the oxide particle of Example 2-1 is shown in FIG. 2.

According to the SEM image of FIG. 2, it was identified that primary particles grew to a uniform size in the entire particle.

### (2) FWHM(104) Analysis

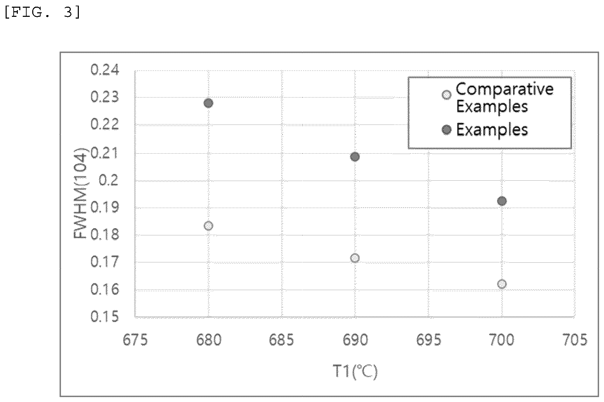

For each of the positive electrode active materials of Examples 1-1 to 1-3 and Comparative Examples 1-1 to 1-3, a FWHM(104) value depending on the first heat treatment temperature was measured, and the results are shown in FIG. 3. The method of measuring FWHM(104) is as described above.

According to the measurement results, in Comparative Examples in which the compositions of the core portion and the shell portion are not different, it was identified that the values tended to be smaller even though the same amount of Zr was doped as in Examples.

### (3) Analysis on Charge and Discharge Capacity and High-Temperature Lifetime Properties

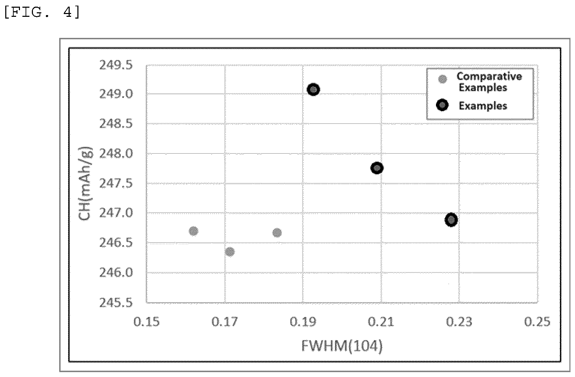

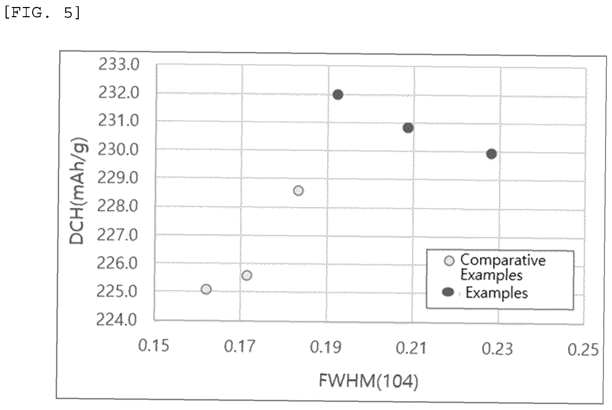

For each of the lithium secondary batteries of Examples 1-1-1, 1-2-1 and 1-3-1 and Comparative Examples 1-1-1, 1-2-1 and 1-3-1, a charge and discharge experiment was performed using an electrochemical analysis device (Toyo, Toscat-3100) with a discharge rate of 0.2 C in a voltage range of 3.0 V to 4.25 V at 25°C, and charge capacity and discharge capacity are shown in FIGS. 4 and 5.

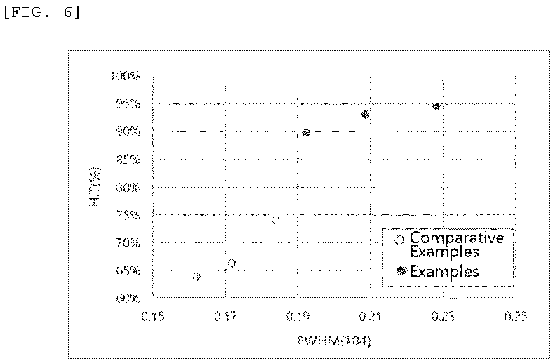

In addition, for each of the lithium secondary batteries, charge and discharge was performed twice under a condition of 25°C, voltage range of 3.0 V to 4.3 V and 0.1 C/0.1 C, then charge and discharge was performed once under a condition of 45°C, voltage range 3.0 V to 4.4 V and 0.1 C/0.1 C, and then charge and discharge was performed 50 times under a condition of 45°C, voltage range of 3.0 V to 4.4 V and 1.0 C/1.0 C. Then, a ratio of discharge capacity at the 50^{th} cycle with respect to initial capacity (cycle capacity retention) was measured, and the results are shown in FIG. 6.

According to the measurement results, it was identified that charge and discharge capacity and high-temperature lifetime properties were significantly improved in Examples compared to in Comparative Examples in which the same amount of Al was doped as in Examples but the compositions of the core portion and the shell portion are not different.

### (4) Analysis on Amount of Gas Generation

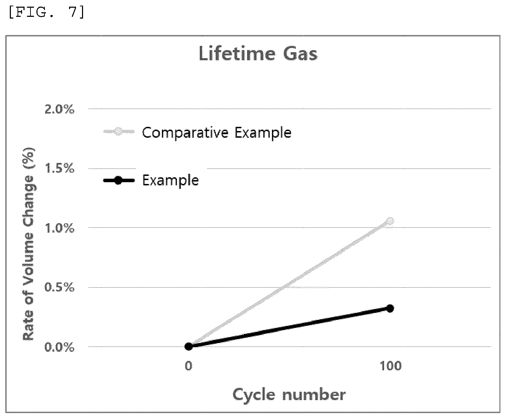

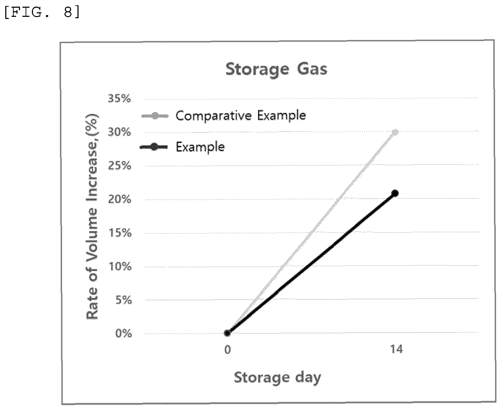

Each of the lithium secondary batteries of Example 1-1-1 and Comparative Example 1-1-1 was charged to 4.25 V with a constant current of 0.2 C, and then stored at 60°C for up to 80 hours. The rate of volume increase, which is an indicator of gas generation, was measured by measuring changes in the volume of the lithium secondary battery caused by gas generation in the lithium secondary battery, and the results are shown in FIGS. 7 and 8.

According to the measurement results, based on the full cell evaluation of 300 cycles, it was identified that the rates of lifetime gas and storage gas generations significantly decreased in Examples compared to in Comparative Examples in which the same amount of Al was doped as in Examples but the compositions of the core portion and the shell portion are not different.

### (5) FWHM(104) Analysis

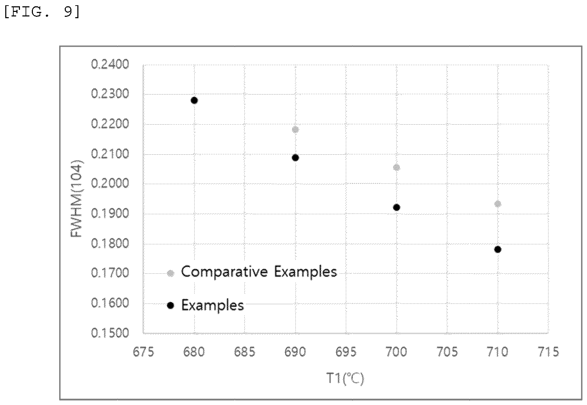

For each of the positive electrode active material particles of Examples 1-1 to 1-4 and Comparative Examples 2-1 to 2-4, a FWHM(104) value depending on the first heat treatment temperature was measured, and the results are shown in FIG. 9. The method of measuring FWHM(104) is as described above.

According to the measurement results, it was identified that, at the same calcination temperature, the particle size increased in Examples compared to in Comparative Examples having a core-shell structure with no Zr doped. This means that, by doping Zr in the core portion and performing first heat treatment, Zr played a role of a flux contributing to the particle growth.

### (6) Analysis on Charge and Discharge Capacity

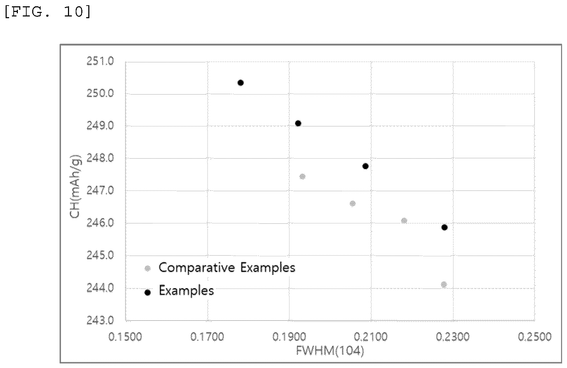

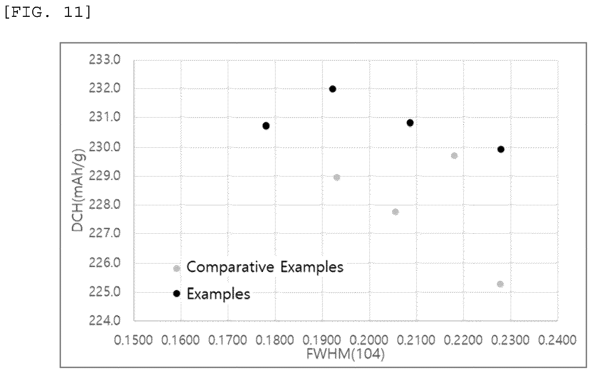

For each of the lithium secondary batteries of Examples 1-1-1, 1-2-1, 1-3-1 and 1-4-1 and Comparative Examples 2-1-1, 2-2-1, 2-3-1 and 2-4-1, a charge and discharge experiment was performed using an electrochemical analysis device (Toyo, Toscat-3100) with a discharge rate of 0.2 C in a voltage range of 3.0 V to 4.25 V at 25°C, and charge capacity and discharge capacity are shown in FIGS. 10 and 11.

According to the measurement results, it was identified that charge and discharge capacity was significantly improved in Examples compared to in Comparative Examples having a core-shell structure with no Zr doped

### (7) Analysis on Amount of Gas Generation

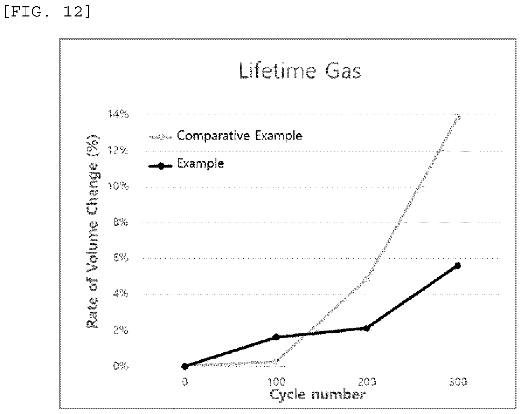

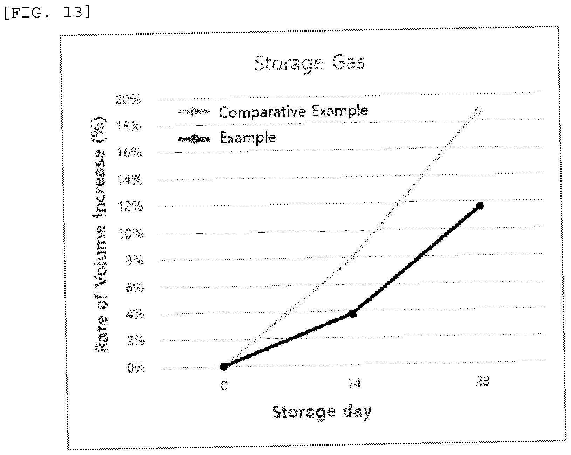

Each of the lithium secondary batteries of Example 1-1-1 and Comparative Example 2-1-1 was charged to 4.25 V with a constant current of 0.2 C, and then stored at 60°C for up to 80 hours. The rate of volume increase, which is an indicator of gas generation, was measured by measuring changes in the volume of the lithium secondary battery caused by gas generation in the lithium secondary battery, and the results are shown in FIGS. 12 and 13.

According to the measurement results, based on the full cell evaluation of 300 cycles, it was identified that the rates of lifetime gas and storage gas generations significantly decreased in Examples compared to in Comparative Examples having a core-shell structure with no Zr doped.

## Claims

1. A positive electrode active material precursor particle comprising:
a core portion; and
a shell portion,
wherein the core portion includes nickel (Ni) and zirconium (Zr),
the shell portion includes cobalt (Co),
a mol% value of the nickel (Ni) of the core portion is greater than a mol% value of nickel (Ni) of the shell portion,
a mol% value of the zirconium (Zr) of the core portion is greater than a mol% value of zirconium (Zr) of the shell portion,
a mol% value of the cobalt (Co) of the shell portion is greater than a mol% value of cobalt (Co) of the core portion,
wherein, the mol% value of a specific transition metal of the core portion means a mol% value of the specific transition metal with respect to all transition metals included in the core portion, and
the mol% value of a specific transition metal of the shell portion means a mol% value of the specific transition metal with respect to all transition metals included in the shell portion.

2. The positive electrode active material precursor particle of claim 1, wherein the shell portion further includes nickel (Ni).

3. The positive electrode active material precursor particle of claim 1, wherein the shell portion further includes any one or more selected from among manganese (Mn) and aluminum (Al).

4. The positive electrode active material precursor particle of claim 1, wherein the shell portion does not include zirconium (Zr).

5. The positive electrode active material precursor particle of claim 1, wherein the core portion does not include cobalt (Co).

6. The positive electrode active material precursor particle of claim 1, wherein the core portion does not include manganese (Mn) and aluminum (Al).

7. The positive electrode active material precursor particle of claim 1, wherein the zirconium (Zr) is included in an amount of 0.05 mol% to 0.3 mol% with respect to all transition metals included in the positive electrode active material precursor particle.

8. The positive electrode active material precursor particle of claim 1, further comprising a concentration gradient portion in which any one or more transition metals have a concentration gradient between the core portion and the shell portion.

9. A positive electrode active material particle comprising:
a core portion; and
a shell portion,
wherein the core portion includes nickel (Ni) and zirconium (Zr),
the shell portion includes cobalt (Co),
a mol% value of the nickel (Ni) of the core portion is greater than a mol% value of nickel (Ni) of the shell portion,
a mol% value of the zirconium (Zr) of the core portion is greater than a mol% value of zirconium (Zr) of the shell portion,
a mol% value of the cobalt (Co) of the shell portion is greater than a mol% value of cobalt (Co) of the core portion,
wherein the mol% value of a specific transition metal of the core portion means a mol% value of the specific transition metal with respect to all transition metals other than lithium (Li) included in the core portion, and
the mol% value of a specific transition metal of the shell portion means a mol% value of the specific transition metal with respect to all transition metals other than lithium (Li) included in the shell portion.

10. The positive electrode active material particle of claim 9, further comprising a concentration gradient portion in which any one or more transition metals have a concentration gradient between the core portion and the shell portion.

11. The positive electrode active material particle of claim 9, further comprising a coating oxide.

12. A positive electrode active material particle prepared from the positive electrode active material precursor particle of claim 1.

13. The positive electrode active material particle of claim 12, further comprising a coating oxide.

14. A positive electrode comprising the positive electrode active material particle of claim 9.
